# EUROPEAN PATENT APPLICATION

(11) **EP 1 883 244 A2**
(43) Date of publication of application: **30.01.2008**
(21) Application number: 07113421.7
(22) Date of filing: 30.07.2007
(51) Int. Cl.: H04N 7/24

(54) **Apparatus and method for transmitting moving picture stream using bluetooth**

(30) Priority: 28.07.2006 KR 20060071443
(71) Applicant: Samsung Electronics Co., Ltd., Suwon-si, Gyeonggi-Do (KR)
(72) Inventor: Kim, Eun-Chul, Yeongtong-gu, Suwon-si Gyeonggi-do (KR); Lee, Sang-In, Yeongtong-gu, Suwon-si Gyeonggi-do (KR); Lee, Yong-Ho, Yeongtong-gu, Suwon-si Gyeonggi-do (KR); Shim, Hyun-Jeong, Yeongtong-gu, Suwon-si Gyeonggi-do (KR); Kim, Hyo-Jin, Yeongtong-gu, Suwon-si Gyeonggi-do (KR)
(74) Representative: Grünecker, Kinkeldey, Stockmair & Schwanhäusser Anwaltssozietät

(57) **Abstract**

Disclosed is a Bluetooth® moving picture stream transmission terminal for moving picture data stream transmission through Bluetooth® to a moving picture output device. The Bluetooth® terminal provides the moving picture output device with the optimized streaming service by either acquiring the transcoding reference variable according to decoding function included in the moving picture output device when the Audio Video Distribution Transport Protocol (AVDTP) channel of the moving picture output device is opened, or acquiring the transcoding reference variable by using the newly defined transcoding reference variable request/response message after opening the AVDTP channel, and by setting an encoding environment with reference to the acquired transcoding reference variable, and encoding the corresponding moving picture and transmitting stream of the encoded moving picture through Bluetooth®.

## Description

The present invention relates generally to Bluetooth®, and more particularly to an apparatus and method for transmitting a moving picture stream using Bluetooth®.

Bluetooth® refers to a representative wireless communication technology which wirelessly transfers voice and data in communication among various digital devices by using an Industrial Scientific Medical (ISM) frequency of 2.4GHz at a maximum speed of 1Mbps through 3Mbps in a short distance within about 10 meters. Since Bluetooth® makes use of 2.4GHz of an ISM band, there is no separate service charge such as information charge. Additionally, as it also provides a low power mode, it has been mainly applied to portable devices. In general, Bluetooth® transmits voices and data through a Synchronous Connection-Oriented (SCO) link and an Asynchronous Connection-Less (ACL) link respectively, and supports various profiles according to types of data to be transmitted.

Since Bluetooth® has been installed in various devices such as Personal Digital Assistants (PDA), Note-Personal Computers (PCs) and cell phones, its application has been widely spread to use in Headset-Handsfree, Stereo Headsets, wireless keyboards, printers and Bluetooth® televisions, for example. In particular, the Bluetooth® television receives streamed moving pictures including various types of video and audio from devices such as a Digital Multimedia Broadcasting (DMB) terminal or a personal computer with Bluetooth® modules through the Bluetooth®, and outputs them in real time.

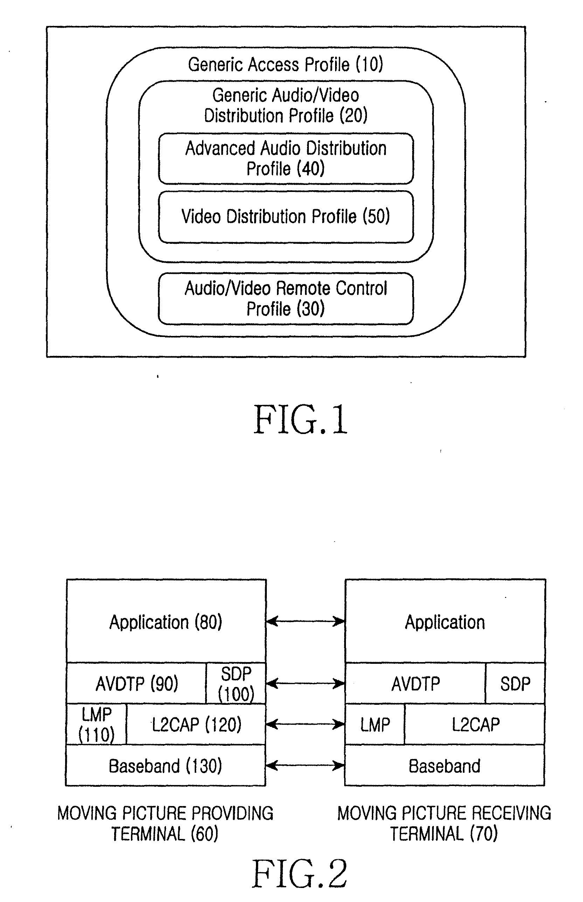

A moving picture service profile as illustrated in FIG. 1 is needed in order to transmit a moving picture through Bluetooth®. Here, a stack structure of a protocol is illustrated in FIG. 2. FIG. 1 illustrates a conventional Bluetooth® moving picture service profile for transmitting a moving picture, and FIG. 2 illustrates a conventional stack structure of a Bluetooth® protocol in transmitting the moving picture.

As illustrated in FIG. 1, there are five fundamental profiles for a moving picture streaming service through Bluetooth®, which include Generic Access Profile (GAP) 10, Generic Audio-Video Distribution Profile (GAVDP) 20, Audio-Video Remote Control Profile (AVRCP) 30, Advanced Audio Distribution Profile (A2DP) 40 and Video Distribution Profile (VDP) 50. As described in FIG. 2, there is a protocol stack for a moving picture streaming service through Bluetooth®, which includes a Baseband 130 defined in a Bluetooth® Core Stack, a Link Manager Protocol (LMP) 110, Logical Link Control and Adaptation Protocol (L2CAP) 120, Service Discovery Protocol (SDP) 100, an Application 80 and an Audio Video Distribution Transport Protocol (AVDTP) 90.

Referring to FIG. 1, the five Bluetooth® moving picture profiles will be described below. First, the GAP 10 is a fundamental connection-related profile used in order to access a communication partner's device through Bluetooth®, and also to a profile for processing Authority, Authentication, Encryption, and Paging according to a Bluetooth® Security Model when connection to a Peer Device is required. The GAVDP 20 is a profile used for controlling the setting, termination, and resetting of a streaming channel between two devices, among processes for transmitting audio or video contents to a communication partner's device through an ACL channel. The AVRCP 30 is a profile which defines a function relevant to controls among Bluetooth® devices in accordance with an audio-video distribution scenario, is a type of message sequence suitable for the AVCTP 90, and defines all messages related to remote controls among the Bluetooth® devices. The A2DP 40 is a profile for transmitting mono and stereo audio contents of high sound quality through the ACL channel, and supports data compression in order to efficiently transmit audio data within a limited bandwidth. The VDP 50 is a profile for supporting video streaming by sending video contents through the ACL channel, and also to a profile which defines a transport protocol necessary for supporting streaming of compressed audio data of high sound quality and streaming of video data compressed according to the bandwidths.

Referring to FIG. 2, in providing a moving picture streaming service by using Bluetooth®, the Baseband 130 in the protocol stack actually transmits/receives data through a physical link, the LMP 110 and L2CAP 120 allocate a logical channel and set a link between two Bluetooth® devices. The SDP 100 is a protocol used for acquiring a service type of the communication partner's Bluetooth® device, and the AVDTP 90 handles Transport Signaling and Flow control in actual streaming. The AVDTP 90 is a transport protocol necessary for connection for transmission of a moving picture, and for streaming of moving picture data through a Bluetooth® wireless interface. Fundamentally, the transport mechanism and message format of the AVDTP 90 are based on a Real-time transport protocol data Transfer Protocol (RTP) and a RTP Control Protocol (RTCP), and transmit data by using the ACL link of the L2CAP 120 connection. The video and audio data included in moving pictures are streamed according to a protocol defined by the VDP 50 and A2DP 40.

Hereinafter, a conventional codec type supported by the Bluetooth® moving picture profiles will be described. The VDP 50 basically supports an H.263 codec. In the H.263, since transmission is easily performed by the frame, it should be basically applied to Bluetooth®. Also, the VDP 50 selectively supports a Motion Picture Experts Group (MPEG)-4 visual simple profile, an H.263 profile 3 and an H.263 profile 8. Since the MPEG-4 visual simple profile corresponds to a codec capable of compressing data of high picture quality by using a Discrete Cosine Transform (DCT) and quantization algorithm, and causes data to be easily stored, a Transcoding and a frame data format are required in data streaming. The A2DP 40 basically supports a Subband Codec (SBC). The SBC has a high compression rate like the H.263, and is useful for streaming. The A2DP 40 also supports an MPEG-1, an MPEG-2, an MPEG-4 audio and an Advanced Audio Coding (ACC) as well as the SBC. When a codec is not supported by the VDP 50 and the A2DP 40, a vendor specific codec is used. The vendor specific codec uses a codec suitable for each vendor, which is not supported by the VDP 50 and the A2DP 40, for the purpose of simply supporting streaming among corresponding devices.

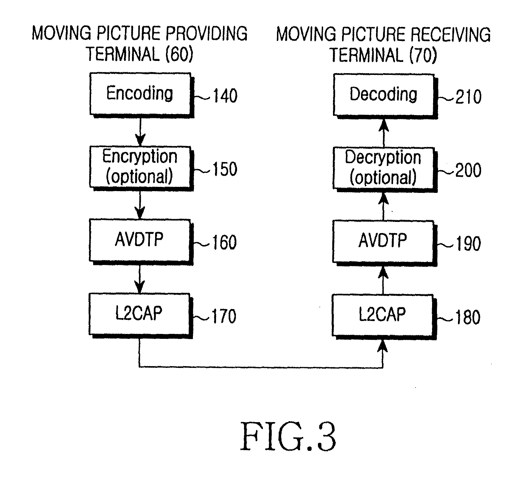

A terminal should include at least one codec out of the Bluetooth® moving picture service profile, the protocol stack and a Bluetooth®-support codec, in order to stream a moving picture using the Bluetooth®. A practical moving picture data process in a moving picture streaming service by these terminals is illustrated in FIG. 3.

FIG. 3 illustrates a data processing procedure in the transmission of a moving picture stream using the Bluetooth®. Referring to FIGs. 2 and 3, a moving picture-providing terminal 60 transmits a moving picture through streaming by using Bluetooth® communication, and a moving picture-receiving terminal 70 includes a moving picture output device, receives the moving picture transmitted from the moving picture-providing terminal 60, and reproduces and outputs the received moving picture in real time. The moving picture-providing terminal 60 may include a DMB terminal with the Bluetooth® module or a personal computer, and a television with the Bluetooth® module can be the moving picture-receiving terminal 70.

The moving picture-providing terminal 60 must encode the moving picture data according to the codec supported by the moving picture-receiving terminal 70 in order to normally provide the moving picture-receiving terminal 70 with the moving picture streaming service using the Bluetooth®. Accordingly, for streaming setup, when the moving picture-providing terminal 60 acquires access capability from the moving picture-receiving terminal 70, it also acquires the information on the codec type and codec level supported by the moving picture-receiving terminal 70. Then, the moving picture-providing terminal 60 encodes moving picture data, i.e., video data and audio data, by the frame at step 140. The moving picture frame data is encrypted at step 150 and transmitted to the moving picture-receiving terminal 70 through a corresponding Bluetooth® stack (AVDTP 90 at step 160, L2CAP 120 at step 170) via a physical link of the baseband 130. The moving picture-receiving terminal 70 decrypts the received moving picture frame data at step 200 and then decodes and outputs the data at step 210.

Because the moving picture-providing terminal 60 acquires only the information on the codec type and codec level that the moving picture-receiving terminal 70 supports when it acquires the access capability from the moving picture-receiving terminal 70, the moving picture-providing terminal 60 is not able to acquire information necessary for the dynamic data compression of the moving picture-providing terminal 60. Therefore, it is not possible to provide an adaptive streaming service, and stream transmission may be interrupted or broken. In other words, when information necessary for data transmission is incorrectly obtained, which may occur when the moving picture-providing terminal 60 compresses the moving picture data according to its own codec type and compression scheme, the moving picture data may be excessively transmitted, which may result in the occurrence of overhead in which a limited transmission bandwidth is exceeded. Accordingly, the streaming and consecutive framing is interrupted. Further, due to power consumption caused by necessary data transmission, unexpected problems may occur in terms of low power support for the Bluetooth®. Moreover, it is difficult for the moving picture-providing terminal 60 to set a bitrate, the resolution and the framerate of an image output means included in the moving picture-receiving terminal 70 by using only the information Getcapability obtained from the conventional AVDTP 90. The moving picture-providing terminal 60 does not receive core information on the data transcoding.

Accordingly, the present invention has been developed to solve the above-mentioned problem occurring in the art. It is the object of the present invention to provide an apparatus and method capable of improving the streaming quality even in a limited bandwidth by transmitting moving picture data according to transmission environments in the transmission of moving picture stream using Bluetooth®.

This object is solved by the subject matter of the independent claims.

Preferred embodiments are defined in the dependent claims.

An aspect of the present invention to provide an apparatus and method capable of improving the streaming quality by compressing and transmitting moving picture data to be suitable for a moving picture data reproduction function of a reception-side terminal in the transmission of moving picture stream using Bluetooth®.

It is another aspect of the present invention to provide an apparatus and method capable of reducing power unnecessarily consumed in the transmission of moving picture stream using Bluetooth®.

It is yet another aspect of the present invention to provide an apparatus and method capable of correctly understanding the bitrate and framerate of a codec, and resolution of display screen included in a reception-side terminal in the transmission of moving picture stream using Bluetooth®.

It is still another aspect of the present invention to provide an apparatus and method capable of setting a transmission-side terminal's streaming environment according to the bitrate and framerate of a codec, and resolution of display screen included in a reception-side terminal in the transmission of moving picture stream using Bluetooth®.

In order to accomplish the aspects of the present invention, there is provided a moving picture stream transmission terminal with the first Bluetooth® module capable of transmitting a moving picture stream through the Bluetooth® module, and a moving picture stream transmission method with the second Bluetooth® module capable of using Bluetooth® among moving picture output devices which stream output the moving picture by receiving the moving picture stream transmitted through Bluetooth®, the method including setting connection for a Bluetooth® communication between the moving picture stream transmission terminal and the moving picture output device by the moving picture stream transmission terminal, receiving a transcoding reference variable, which has been created in correspondence to a Bluetooth® wireless environment and a codec function included in the moving picture output device, from the moving picture output device in generating a Bluetooth® link for moving picture stream transmission by the moving picture stream transmission terminal, setting a moving picture encoding environment with reference to the transcoding reference variable by the moving picture stream transmission terminal, and stream encoding and transmitting the moving picture through the Bluetooth® module by the moving picture stream transmission terminal.

The present invention will be more apparent from the following detailed description taken in conjunction with the accompanying drawings, in which:
FIG. 1 illustrates a conventional Bluetooth® moving picture service profile for general use in transmitting a moving picture;
FIG. 2 illustrates a general stack structure of a Bluetooth® protocol in transmitting the moving picture;
FIG. 3 illustrates a data processing procedure in the transmission of a moving picture stream using Bluetooth®;
FIG. 4 illustrates a moving picture stream transmission terminal and a moving picture output device to which the present invention is applied;
FIG. 5 illustrates an encoding environment set by the moving picture stream transmission terminal with reference to a transcoding reference variable according to a first embodiment of the present invention;
FIG. 6 illustrates the structure of the transcoding reference variable according to the first embodiment of the present invention;
FIG. 7 illustrates a process of acquisition of the transcoding reference variable by the moving picture stream transmission terminal according to the first embodiment of the present invention; and
FIG. 8 illustrates a process of acquisition of the transcoding reference variable by the moving picture stream transmission terminal according to a second embodiment of the present invention.

Hereinafter, preferred embodiments of the present invention will be described in detail with reference to the accompanying drawings. The same reference numerals are used to denote the same structural elements throughout the drawings. In the following description of the present invention, the detailed description of known functions and configurations incorporated herein is omitted for the sake of clarity and conciseness.

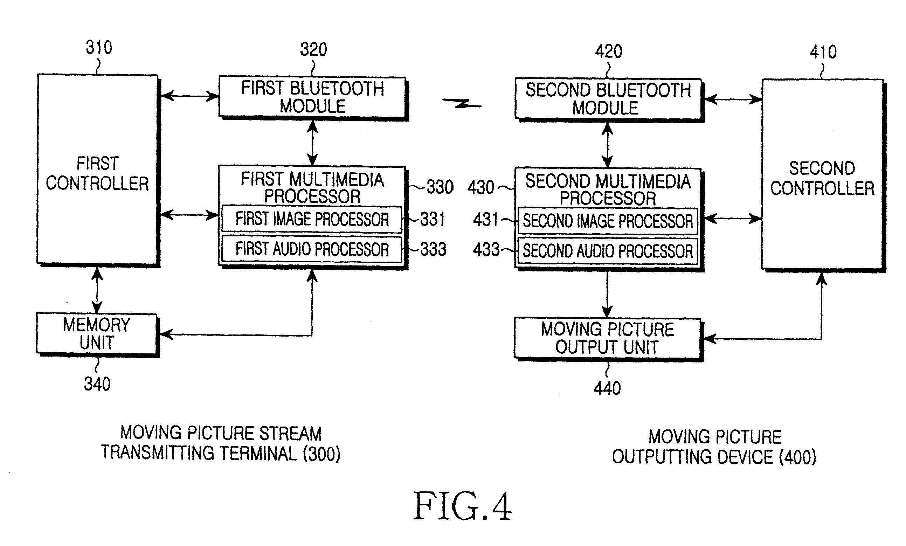

FIG. 4 illustrates a moving picture stream transmitting terminal 300 and a moving picture outputting device 400 to which the present invention is applied. The Bluetooth® terminal includes a Bluetooth® module. The moving picture stream transmission terminal 300 and the moving picture output device 400 are one example of the Bluetooth terminal. The moving picture stream transmission terminal 300 is able to stream transmit a moving picture through Bluetooth®. The terminal 300 may be, for example, a Digital Multimedia Broadcasting (DMB) terminal or a personal computer. The moving picture may include video data and audio data. The moving picture output device 400, which is a television, for example, can receive a moving picture stream and reproduce the received moving picture in real time.

Referring to FIG. 4, the moving picture stream transmission terminal 300 includes the first controller 310, the first Bluetooth® module 320, the first multimedia processor 330 and a memory unit 340.

The first Bluetooth® module 320 performs Bluetooth® communication, is configured according to the protocol stack for moving picture streaming transmission/reception, and includes profiles necessary for moving picture streaming transmission/reception. According to the present invention, when the first Bluetooth® module 320 opens the Bluetooth® channel for transmitting (i.e., streaming) the moving picture data under the control of the first controller 310, or before it transmits the moving picture stream after opening the Bluetooth® channel, it acquires a transcoding reference variable from the reception-side terminal to output the acquired transcoding reference variable to the first multimedia processor 330. Thereafter, the first Bluetooth® module 320 transmits the moving picture data input from the first multimedia processor 330, i.e., the stream of encoded audio and video data.

The first controller 3 10 controls an operation of the moving picture stream transmission terminal 300, outputs moving picture data to be transmitted through streaming to the first multimedia processor 330, and controls encoding operation environment setup of the first multimedia processor 330 according to the transcoding reference variable input by the first Bluetooth® module 320 in accordance with the present invention.

The first multimedia processor 330 includes the first image processor 331 and the first audio processor 333, sets up an encoding environment according to the transcoding reference variable under the control of the first controller 310, and encodes the moving picture data input by the first controller 310 to output the encoded moving picture data to the first Bluetooth® module 320. The first image processor 331 encodes the video data included in the moving picture data. For instance, the first image processor 331 may include an MPEG 4 video decoder and H.263 video decoder. In such a case, the video data is encoded into H.263 frame data. The first audio processor 333 encodes audio data included in the moving picture data. For instance, the first audio processor 333 may include an MPEG 4 ACC decoder and a Subband Codec (SBC) audio encoder. In such a case, the audio data is encoded into the SBC data.

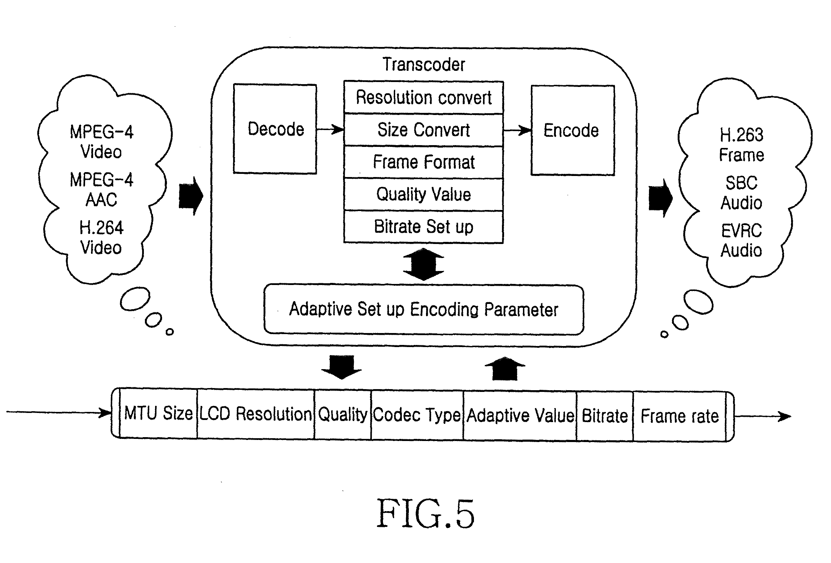

FIG. 5 illustrates an encoding environment set by the moving picture stream transmission terminal with reference to a transcoding reference variable according to a first embodiment of the present invention. In FIG, 5, the transcoding reference variable refers to information on the codec of the Bluetooth® terminal and the Bluetooth® module, which includes a Maximum Transfer Unit (MTU) size, a device type, a codec type, a resolution, quality, the bitrate and the framerate.

The MTU size is decided through a negotiation between the Bluetooth® terminals when connection is set between the Bluetootht® terminals or an AVDTP channel is opened, and it maychange depending on the Bluetooth® wireless environment. The first multimedia processor 330 determines and sets the numerical values of the bitrate and the framerate in the encoding of the moving picture with reference to the MTU size. That is, the bigger the MTU size is, the higher bitrate and framerate the moving picture stream transmission terminal 300 can set in relation to the moving picture encoding.

The bitrate refers to a transmission rate that shows transmittable bits per second. The bitrate included in the transcoding reference variable indicates the bitrate that can be supported by the codec of the Bluetooth® terminal. In the encoding of moving picture video data, as the output bitrate increases, bits allocated per partial areas of a frame can be increased, which results in the improvement of the picture quality. However, a high bitrate may cause data overhead. Accordingly, the first multimedia processor 330 determines an output bitrate in the encoding of moving picture with reference to the MTU size and the bitrate, which can be supported by the codec of the communication partner's Bluetooth® terminal.

The framerate refers to a numerical value indicating the number of frames per second of an I frame, a B frame and a P frame required for moving picture video encoding. The framerate included in the transcoding reference variable shows a framerate that can be supported by the codec of the Bluetooth® terminal. If a high framerate is set in video data encoding, the picture quality can be improved in screen switching. However, the high framerate may cause data overhead. Therefore, the first multimedia processor 330 determines the framerate in moving picture encoding with reference to the MTU size and the framerate that can be supported by the codec of the communication partner's Bluetooth® terminal.

The codec type refers to a codec type and codec level information included in the Bluetooth® terminal. The first multimedia processor 330 sets the codec type, which is used in encoding of moving picture according to the codec type of the communication partner's Bluetooth® terminal, and codec level. Here, it can also configure the codec type that can be supported by Dongle through adding each codec type setup routine so that the codec type can be correctly recognized.

The device type refers to type information on the Bluetooth® module, is defined by using a Class of Device (COD) indicating each device, and may be understood when a Bluetooth® connection is setup. The first multimedia processor 330 is capable of using the device type, i.e., a Bluetooth® module type included in the communication partner's Bluetooth® terminal as a parameter of quality setting in the encoding of moving picture, and makes reference to the device type for setting a streaming scheme.

The resolution refers to a display screen (Liquid Crystal Display or LCD) resolution included in the Bluetooth® terminal. If the display screen resolution of device to output a moving picture in the encoding of moving picture is known, then the moving picture may be optimized and encoded on the moving picture output device. Thus, it is possible to reduce unnecessary data transmission. Accordingly, the first multimedia processor 330 can set an optimized moving picture encoding output resolution on the display screen included in the communication partner's Bluetooth® terminal with reference to the resolution.

The quality refers to the quality information of the frame data in streaming. The quality included in the transcoding reference variable indicates a quality which can be supported by the codec of the Bluetooth® terminal.

The first multimedia processor 330 is able to set the quality of the moving picture encoding within a quality range which can be supported by the codec of the communication partner's Bluetooth® terminal with reference to the device type and other information.

In other words, the first multimedia processor 330 sets the codec to be used in encoding of the moving picture with reference to the codec type among the received transcoding reference variables and also sets the bitrate, the framerate and the quality in encoding of moving picture with reference to the MTU size, the resolution, the device type, the quality, the bitrate and the framerate, which are illustrated in FIG. 5. Referring back to FIG. 4, the memory unit 340 stores a program for processing and controlling the first controller 310, reference data, variable updatable storage data and moving picture data, and can be provided as a working memory of the controller 310. It also stores program data necessary for setting the encoding environment according to the present invention, and a transcoding reference variable structure in which the transcoding reference variable is stored.

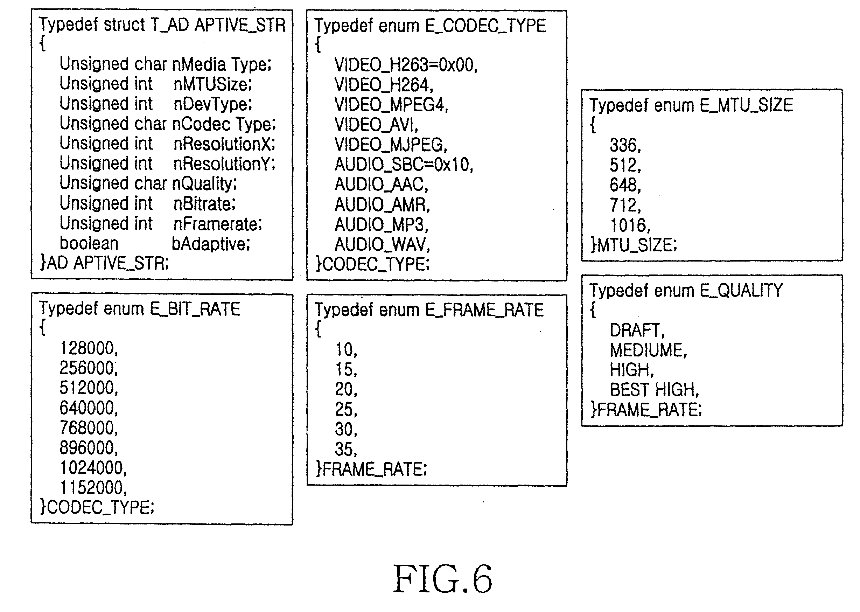

FIG. 6 illustrates the transcoding reference variable structure and values that can be set in correspondence to each reference variable. The transcoding reference variable can be configured to be acquired through the messages received/transmitted among the Bluetooth® modules in the process of general AVDTP channel open according to a first embodiment of the present invention, or also can be configured to be acquired through receiving/transmitting streaming information request/response message among the Bluetooth® modules after AVDTP channel is opened, by defining streaming information request/response message related to the Video Distribution Profile (VDP) according to a second embodiment of the present invention. Referring back to FIG. 4, the moving picture output device 400 includes the second controller 410, the second Bluetooth® module 420, the second multimedia processor 430 and a moving picture output unit 440.

The second Bluetooth® module 420 performs the Bluetooth® communication, is configured according to the protocol stack for receiving/transmitting the moving picture streaming, and includes profiles for receiving/transmitting the moving picture streaming. The second Bluetooth® module 420 also transmits the transcoding reference variable to a transmission-side terminal either during the process of the Bluetooth® channel opening for receiving the moving picture data streaming under the control of the second controller 410 or between the Bluetooth® channel opening and the moving picture streaming reception. In other words, the second controller 410 detects the device type, the codec type, the resolution, the quality, the bitrate and the framerate according to the second Bluetooth® module 420, the codec included in the second multimedia processor 430 and the display screen included in the moving picture output unit 440, and then sends the transcoding reference variable to the communication partner's Bluetooth® terminal. Thereafter, the second Bluetooth® module 420 receives the moving picture data transmitted by streaming i.e., encoded audio and video data, and then outputs the data to the second multimedia processor 430.

The second multimedia processor 430 includes the second image processor 431 and the second audio processor 433, and decodes the moving picture data input from the second Bluetooth® module 420, and then stream-outputs the data to the moving picture output unit 440. The second image processor 431 decodes the streaming-received video data. For example, the second image processor 431 may be configured to include an H.263 decoder. In such a case, it decodes H.263 frame data into Red Green and Blue (RGB) data, and then stream-outputs the RGB data to the moving picture output unit 440. The second audio processor 433 decodes the streaming-received audio data. For example, the second audio processor 433 may be configured to include an SBC decoder. In such a case, it decodes the SBC data into Pulse Code Modulation (PCM) data, and then stream-outputs the PCM data to the moving picture output unit 440.

The moving picture output unit 440 reproduces and outputs the video and audio data streaming-input from the second multimedia processor 430.

If a user requires a random moving picture data stream transmission to the moving picture output device 400, the moving picture stream transmission terminal 300 sets the connection between the first Bluetooth® module 320 and the second Bluetooth® module 420 of the moving picture output device 400 and opens the AVDTP channel. Here, according to the present invention, the second Bluetooth® module 420 of the moving picture output device 400 transmits the transcoding reference variable according to a decoding function of the second multimedia processor 430 to the first Bluetooth® module 320. After the moving picture stream transmission terminal 300 sets the encoding environment of the first multimedia processor 330 with reference to the received transcoding reference variable, it provides the optimized streaming service for the moving picture output device 400 by encoding the corresponding moving picture and streaming-transmitting the moving picture through the first Bluetooth® module 320.

The process of acquiring the transcoding reference variable from the moving picture output device 400 by the moving picture stream transmission terminal 300 will be described according to two embodiments of the present invention.

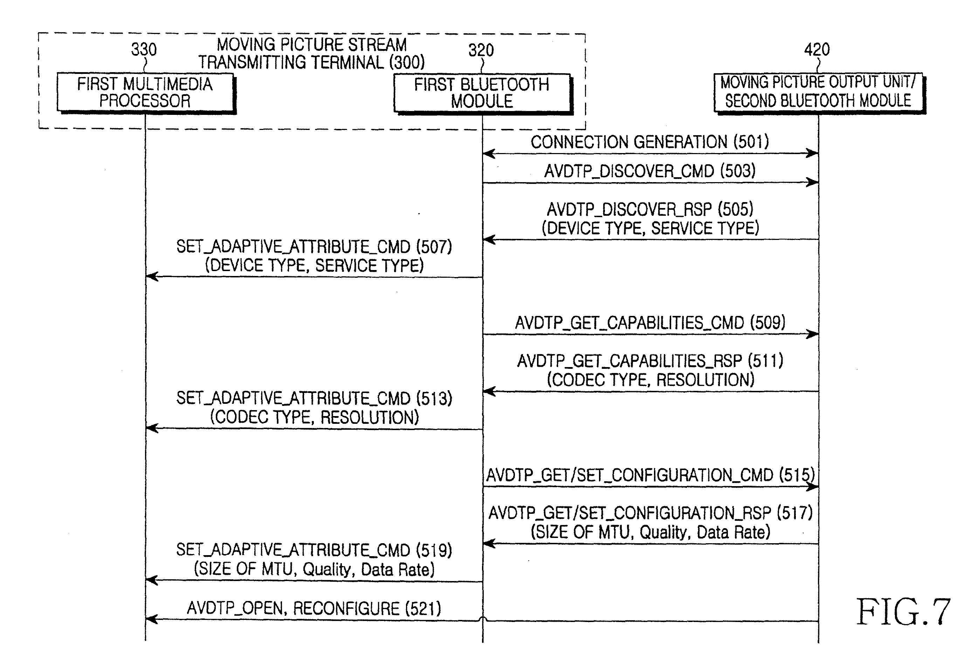

FIG. 7 is a view illustrating a process of acquisition of the transcoding reference variable by the moving picture stream transmission terminal according to the first embodiment of the present invention. In FIG. 7, the transcoding reference variable may be transmitted through the messages received/transmitted among the Bluetooth® modules in a process of the AVDTP channel opening. According to the first embodiment, though the types of the messages received/transmitted among the Bluetooth® modules is the same as the existing sorts in the process of the AVDTP channel opening, each response message corresponding to each command message includes additional data field according to the present invention. The transcoding reference variable is included in the added data field. Referring to FIG. 7, when the connection between the first Bluetooth® module 320 of the moving picture stream transmission terminal 300 and the second Bluetooth® module 420 of the moving picture output device 400 is generated at step 501, the first Bluetooth® module 320 transmits an AVDTP_DISCOVER CoMmanD (CMD) message to the second Bluetooth® module 420 at step 503. The second Bluetooth® module 420 receiving the AVDTP_DISCOVER CMD message transmits an AVDTP_DISCOVER ReSPonse (RSP) message including the device type and service type under the control of the second controller 410 to the first Bluetooth® module 320 at step 505. The service type is a value that can be found within the service discovery protocol needed in the Bluetooth®. It can be added when each attribute does exist through reference to a VDP profile SDP Interoperability part. The AVDTP_DISCOVER RSP message includes a field in which the device type and the service type are stored. The first Bluetooth® module 320 stores the device type and service type, which are included in the received AVDTP_DISCOVER RSP message, in the transcoding reference variable structure of the memory unit 340 and transmits a SET_ADAPTIVE _ATTRIBUTE_CMD message including the device type and the service type to the first multimedia processor 330 at step 507. The first multimedia processor 330 sets a streaming scheme with reference to the device type and the service type, uses the types as parameters in setting the quality. The first Bluetooth® module 320 transmits an AVDTP_GET_CAPABILITIES_CMD message to the second Bluetooth® module 420 at step 509. The second Bluetooth® module 420 receiving the AVDTP_GET_CAPABILITIES_CMD transmits an AVDTP_GET_CAPABILTIES_RSP including the codec type included in the second multimedia processor 430 and the resolution of display screen included in the moving picture output unit 440, to the first Bluetooth® module 320 at step 511. The AVDTP_GET_CAPABILITIES_RSP message includes a data field in which the codec type and the resolution are stored. The first Bluetooth® module 320 receiving the AVDTP GET_CAPABILITIES_RSP stores the codec type and the resolution in the transcoding reference variable structure of the memory unit 340 and outputs a SET_ADAPTIVE_CMD message including the type and the resolution to the first multimedia processor 330 at step 513. The first multimedia processor 330 sets the codec type, codec level and output resolution used for the moving picture encoding with reference to the input codec type and the resolution. The first Bluetooth® module 320 transmits an AVDTP_GET/ SET_CONFIGURATION_CMD message to the second Bluetooth® module 420 at step 515. The second Bluetooth® module 420 receiving the AVDTP_GET/ SET_CONFIGURATION_CMD message transmits an AVDTP_GET/ SET_CONFIGURATION_RSP message, which includes the MTU size set on the current Bluetooth® wireless environment and the quality and datarate of the codec included in the second multimedia processor 430, i.e., the bitrate and the framerate, to the first Bluetooth® module 320 at step 517. The AVDTP_GET/ SET_CONFIGURATION_RSP message includes the quality and the data field including the bitrate and the framerare. The first Bluetooth® module 320 stores the MTU size, the quality and the datarate, which are included in the received AYDTP_GET/ SET_CONFIGURATION_RSP message, in the transcoding reference variable structure of the memory unit 340 and outputs the SET_ADAPTIVE_ATTRIBUTE_CMD message including the MTU size, the quality and the datarate to the first multimedia processor 330. The first multimedia processor 330 finally sets the bitrate, the framerate and the encoding quality in the encoding of the moving picture with reference to the MTU size, quality and the datarate. Thereafter, the AVDTP channel is finally opened at step 521. It is possible to set and reset a stream open through a reconfigure message as needed.

Because the transcoding reference variable is collected by the messages received/transmitted in the process of the AVDTP channel open in the first embodiment mentioned above, it is not possible to acquire and store the transcoding reference variable. The second embodiment of the present invention can be configured so that the transcoding reference variable may be acquired by receiving/transmitting a transcoding reference variable request/response message among the Bluetooth® modules after the AVDTP channel is opened through defining the transcoding reference variable request/response message related to the Video Distribution Profile (VDP).

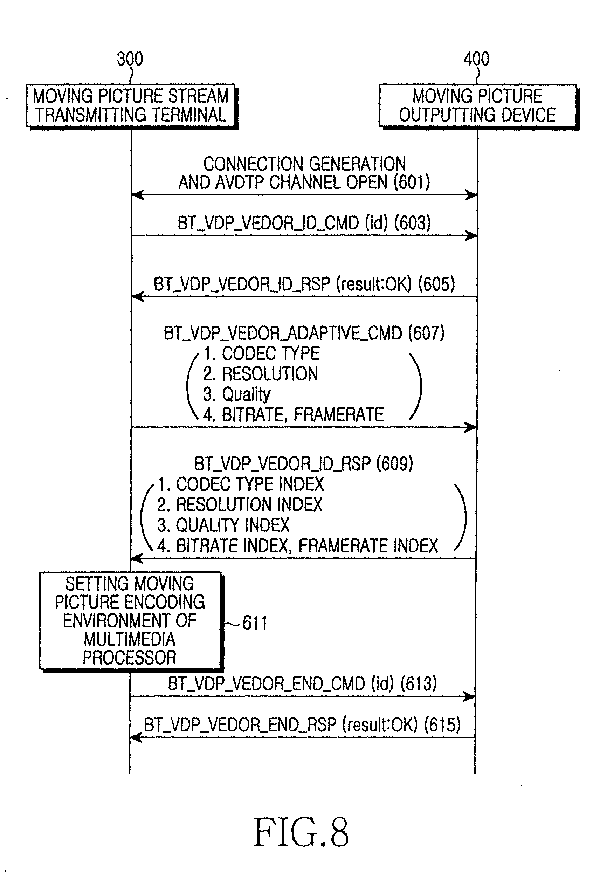

FIG. 8 illustrates a process of acquisition of the transcoding reference variable by the moving picture stream transmission terminal according to the second embodiment of the present invention.

Referring to FIG. 8, the first Bluetooth® module 320 of the moving picture stream transmission terminal 300 and the second Bluetooth® module 420 of the moving picture output device 400 build up connection and open the AVDTP channel at step 601. During step 601, the moving picture stream transmission terminal 300 acquires the MTU size and the device type of the second Bluetooth® module 420. Thereafter, the first Bluetooth® module 320 of the moving picture stream transmission terminal 300 adds an Identifier (ID) to a BT_VDP_VENDOR_ID_CMD message and transmits the message to the second Bluetooth® module 420 of the moving picture output device 400 at step 603. The second Bluetooth® module 420 of the moving picture output device 400 transmits a BT_VDP_VENDOR_ID_RSP message as a response of the BT_VDP_VENDOR_ID_CMD message to the first Bluetooth® module 320 of the moving picture stream transmission terminal 300 at step 605. Thereafter, the first Bluetooth® module 320 of the moving picture stream transmission terminal 300 transmits a BT VDP_VENDOR_ADAPTIVE_CMD message, i.e., the transcoding reference variable request message, to the second Bluetooth® module 420 of the moving picture output device 400 and requests the codec type, the resolution, the quality, the bitrate and the framerate in step 607. The second Bluetooth® module 420 of the moving picture output device 400 receiving the BT_VDP_VENDOR_ADAPTIVE_CMD message adds a codec type index, a resolution index, a quality index, a bitrate index and a Frame index, which are included in the second multimedia processor 430, to a BT_VDP_VENDOR_ADAPTIVE_RSP message, and then transmits them to the first Bluetooth® module 320 of the moving picture stream transmission terminal 300 in step 609. The moving picture stream transmission terminal 300 receiving the BT _VDP_VENDOR_ADAPTIVE_RSP message sets the moving picture encoding environment of the first multimedia processor 330 at step 611 with reference to the MTU size, the device type, which have been acquired at step 601 above, and the codec type, the resolution, the quality, the bitrate and the framerate, which have been received at step 609. Thereafter, the first Bluetooth® module 320 of the moving picture stream transmission terminal 300 and the second Bluetooth® module 420 of the moving picture output device 400 at step 613 and step 615 respectively receive/transmit the BT_VDP_VENDOR_END_CMD message and the BT_VDP_VENDOR_END_END_RSP message, and terminates the transcoding reference variable acquisition process.

As described above, in the present invention, for the purpose of transmitting random moving picture data stream to the moving picture output device 400, the moving picture stream transmission terminal 300 acquires the transcoding reference variable by either the decoding function of the second multimedia processor 430 of the moving picture output device 400 in the AVDTP channel opening between the first Bluetooth® module 320 and the second Bluetooth® module 420 of the moving picture output device 400, or use of the transcoding reference variable request-response message newly defined after the AVDTP channel is opened. It also sets the encoding environment of the first multimedia processor 330 with reference to the acquired transcoding reference variable above, encodes the corresponding moving picture, and then stream transmits through the first Bluetooth® module 320 and provides the moving picture output device 400 with the optimized streaming service.

For a better understanding, the above mentioned messages are further explained. On the assumption that an AVDTP channel is formed between A. Bluetooth module and B. Bluetooth module, an AVDTP_DISCOVER CMD message and an AVDTP_DISCOVER RSP message are messages for detecting, by A. Bluetooth module, B. Bluetooth module which is a confronting Bluetooth module to connected through the AVDTP channel. According to the present invention, AVDTP_DISCOVER CMD/RSP messages indicate a process for obtaining the number of a SEP (Stream End Point) supporting B. Bluetooth module by A. Bluetooth module. Namely, to obtain the number of the SEP, the CMD message is transmitted to any bluetooth module, and then, the RSP message including information on the number of Video SEP and the number of Audio SEP supporting by the bluetooth module is transmitted again from the bluetooth module.

Second, an AVDTP _GET _CAPABILITIES_CMD message and an AVDTP_GET_CAPABILITIES_RSP message are messages for checking whether the AVDTP channel can be connected between two Bluetooth modules. According to the present invention, AVDTP_ GET_CAPABILITIES_CMD/RSP messages indicate a process for obtaining detailed SEP information such as Media Codec Type, Codec Level, Support Sample Frequency, Bitrate, etc., which are correct information relative to the SEP and are gotten by AVDTP_DISCOVER CMD/RSP message. Namely, the CMD message including specific SEP ID is transmitted, and then, the RSP message including information on Video (Codec Type, Level) or Audio (Codec Type, Sampling Frequency, Bitrate), etc. corresponding to the SEP ID is transmitted.

Third, an AVDTP_GET/ SET_CONFIGURATION_CMD message and an AVDTP_GET/ SET_CONFIGURATION_RSP message are messages for setting a substantial AVDTP channel. According to the present invention, AVDTP_GET/ SET_CONFIGURATION CMD/RSP messages indicates a process for comparing information of the SEP obtained through AVDTP_DISCOVER CMD/RSP and AVDTP_GET_CAPABILITIES_CMD/RSP message with information of Contents to be currently played and setting optimum information. That is to say, the CMD message including the SEP ID to be set is transmitted, and then, the RSP message including information on Accept or Reject is transmitted again.

While the invention has been shown and described with reference to certain preferred embodiments thereof, it will be understood by those skilled in the art that various changes in form and details may be made therein without departing from the scope of the invention as defined by the appended claims.

As described above, in the present invention, for the purpose of transmitting the moving picture data stream to the moving picture output device through Bluetooth®, the Bluetooth® moving picture stream transmission terminal can provide the moving picture output device with the optimized streaming service by either acquiring the transcoding reference variable according to decoding function included in the moving picture output device when the AVDTP channel of the moving picture output device is opened, or acquiring the transcoding reference variable by using the newly defined transcoding reference variable request/response message after AVDTP channel opening, and by setting a encoding environment with reference to the acquired transcoding reference variable, and encoding the corresponding moving picture and transmitting stream of the encoded moving picture through Bluetooth®.

The Bluetooth® moving picture stream transmission terminal can also improve the streaming quality even in a limited bandwidth by transmitting the moving picture data adaptively to a transmission environment and reduce power unnecessarily consumed in the transmission of moving picture stream. Furthermore, it can set a transmission-side terminal's streaming environment according to the bitrate of codec, framerate, the resolution of a display screen, which are included in the reception-side terminal.

## Claims

1. A moving picture stream transmission terminal including a first Bluetooth® module for transmitting a moving picture stream through Bluetooth® transmission, and a moving picture stream transmission method with a second Bluetooth® module for incorporating Bluetooth® into a moving picture output device which provides a streaming output of the moving picture by receiving the moving picture stream transmitted through Bluetooth®, the method comprising steps of:
setting by the moving picture stream transmission terminal a connection for Bluetooth® communication between the moving picture stream transmission terminal and the moving picture output device;
receiving by the moving picture stream transmission terminal a transcoding reference variable, which has been created in correspondence to a Bluetooth® wireless environment and a codec function included in the moving picture output device, from the moving picture output device in generating a Bluetooth® link for moving picture stream transmission;
setting by the moving picture stream transmission terminal a moving picture encoding environment with reference to the transcoding reference variable; and
encoding and transmitting by the moving picture stream transmission terminal the moving picture by streaming the moving picture through the Bluetooth® module.

2. The method as claimed in claim 1, wherein the transcoding reference variable further comprises a Maximum Transfer Unit, MTU, size according to a currently set wireless environment of the Bluetooth® communication, a device type of the second Bluetooth® module, a codec type including codec type information and level information which are included in the moving picture output device, a resolution of a display screen included in the moving picture output device, a quality of a moving picture frame which is supportable by the codec of the moving picture output device, an output bitrate and a framerate.

3. The method as claimed in claim 2, wherein setting the moving picture encoding environment by the moving picture stream transmission terminal includes a process of setting the codec type, a codec level, and a streaming scheme, which are used for moving picture encoding, and further setting the output bitrate, the framerate, frame quality and resolution in the moving picture encoding, with reference to the Maximum Transfer Unit, MTU, size of the transcoding reference variable, the device type, the codec type, the resolution, the quality, the output bitrate and the framerate.

4. The method as claimed in claim 3, wherein receiving the transcoding reference variable includes a process in which the moving picture stream transmission terminal receives a response message including the transcoding reference variable, which has been sent by the moving picture output device in correspondence to a command message sent by the moving picture stream transmission terminal for opening an Audio Video Distribution Transport Protocol, AVDTP, channel.

5. The method as claimed in claim 4, wherein receiving the transcoding reference variable further comprises:
transmitting by the moving picture stream transmission terminal an AVDTP_DISCOVER CoMmanD, CMD, message to the moving picture output device;
transmitting by the moving picture output device an AVDTP_DISCOVER ReSPonse, RSP, message including the device type among the transcoding reference variables in response to the AVDTP_DISCOVER CMD message to the moving picture stream transmission terminal;
transmitting by the moving picture stream transmission terminal an AVDTP_GET_CAPABILITIES_CMD message to the moving picture output device;
transmitting by the moving picture output device an AVDTP_GET_CAPABILITIES_RSP message including the codec type and the resolution among the transcoding reference variables in response to the AVDTP_GET _CAPABILITIES_CMD message to moving picture stream transmission terminal;
transmitting by the moving picture stream transmission terminal an AVDTP_GET/ SET_CONFIGURATION_CMD message to the moving picture output device; and
transmitting by the moving picture output device an AVDTP_GET/ SET_CONFIGURATION _RSP message including the MTU size, the quality, the bitrate and the framerate among the transcoding reference variables in response to the AVDTP_GET/ SET_CONFIGURATION_CMD message of moving picture stream transmission terminal.

6. The method as claimed in claim 3, wherein receiving the transcoding reference variable further comprises:
acquiring by the moving picture stream transmission terminal the MTU size and the device type from the transcoding reference variables in generation of a Bluetooth® link for the moving picture stream transmission;
transmitting by the moving picture stream transmission terminal a message requesting a reference variable related to the codec function which is included in the moving picture output device, among the transcoding reference variables after generating the Bluetooth® link; and
transmitting by the moving picture output device a transcoding reference variable response message including the reference variable related to the included codec function among the transcoding reference variables.

7. The method as claimed in claim 6, wherein receiving the transcoding reference variable by the moving picture stream transmission terminal further comprises:
acquiring by the moving picture stream transmission terminal the MTU size and the device type from the transcoding reference variables in generation of a Bluetooth® link for the moving picture stream transmission;
transmitting by the moving picture stream transmission terminal a BlueTooth® BT_Video Distribution Protocol VDP_VENDOR_Identifier ID_CoMmanD, CMD, message;
transmitting by the moving picture output device a BT_VDP_VENDOR_ID_ReSPonse, RSP, message as a response of the BT_VDP_VENDOR_ID_CMD message;
transmitting by the moving picture stream transmission terminal a BT_VDP_VENDOR_ADAPTIVE_CMD message requesting the codec type, the resolution, a quality bitrate and framerate among the transcoding reference variables;
transmitting by the moving picture output device a BT_VDP_VENDOR_ADAPTIVE_RSP message including a codec type index, a resolution index, a quality index, a bitrate index and a frame index of the included codec function, as a response of the BT_VDP_VENDOR_ADAPTIVE_CMD message;
transmitting by the moving picture stream transmission terminal a BT_VDP_VENDOR_END_CMD message; and
transmitting by the moving picture output device a BT_VDP_VENDOR_END_RSP message in correspondence to the BT_VDP_VENDOR_END_CMD message.

8. A moving picture stream transmission device using Bluetooth®, the device comprising:
the first Bluetooth® module for performing Bluetooth® communication, receiving from a communication partner's terminal a transcoding reference variable that has been created in correspondence to a Bluetooth® wireless environment and a codec function included in the communication partner's terminal, in the generation of a Bluetooth® link for moving picture stream transmission, and transmitting the moving picture stream input through the Bluetooth® link to the communication partner's terminal; and
a multimedia processor for setting the moving picture encoding environment with reference to the transcoding reference variable and then encoding and outputting the moving picture by streaming the moving picture to the first Bluetooth® module.

9. The device as claimed in claim 8, wherein the transcoding reference variable further comprises a Maximum Transfer Unit, MTU, size according to the currently set Bluetooth® communication wireless environment, a device type of the second Bluetooth® module included in the communication partner's terminal, a codec type including codec type information and level information which are included in the communication partner's terminal, a resolution of a display screen included in the communication partner's terminal, a quality of a moving picture frame which is supportable by the codec of the communication partner's terminal, the output bitrate and the framerate.

10. The device as claimed in claim 9, wherein the multimedia processor sets the codec type, a codec level and a streaming scheme, which are used for moving picture encoding, and the output bitrate, the framerate, the frame quality and the resolution in the moving picture encoding, with reference to the MTU size, the [device type, the codec type, the resolution, the quality, the output bitrate, and the framerate.

11. The device as claimed in claim 10, wherein the first Bluetooth® module receives a response message that the partner's terminal has transmitted including the transcoding reference variable in correspondence to the command message that the first Bluetooth® module has transmitted for opening an Audio Video Distribution Transport Protocol, AVDTP, channel.

12. The device as claimed in claim 11, wherein the first Bluetooth® module transmits an AVDTP_DISCOVER CoMmanD, CMD, message to the communication partner's terminal, receives an AVDTP_DISCOVER ReSPonse, RSP, message including device type among the transcoding reference variables, as a response of the AVDTP_DISCOVER CMD message, transmits an AVDTP_GET_CAPABILITIES_CMD message to the communication partner's terminal, receives an AVDTP_GET_CAPABILITIES_RSP message including codec type and resolution among transcoding reference variables in response to the AVDTP_GET_CAPABILITIES_CMD message, transmits the AVDTP_GET/ SET_CONFIGURATION_CMD message to the communication partner's terminal, receives the AVDTP_GET/ SET_CONFIGURATION_RSP message including MTU size, quality, bitrate and framerate among the transcoding reference variables in response to the AVDTP_GET/ SET_CONFIGURATION_CMD message.

13. The device as claimed in claim 10, wherein the first Bluetooth® module acquires the MTU size and the device type among the transcoding reference variables in generation of a Bluetooth® link for moving picture stream transmission, transmits the message requesting the reference variable related to the codec function included in the communication partner's terminal after generating the Bluetooth® link, and receives from the communication partner's terminal the transcoding reference variable response message including the reference variable related to the included codec function among the transcoding reference variables.

14. The device as claimed in claim 13, wherein the first Bluetooth® module acquires the MTU size and the device type among the transcoding reference variable in generation of a Bluetooth® link for moving picture stream transmission, transmits the BlueTooth BT_ Video Distribution Protocol VDP VENDOR_Identifier ID_CoMmanD, CMD, message to the communication partner's terminal, receives a BT_ VDP_VENDOR_ID_ReSPonse, RSP, message in response to the BT_VDP_VENDOR_ID_ CMD message, transmits a BT_VDP_VENDOR_ADAPTIVE_ CMD message requesting the codec type, the resolution, the quality bitrate and the framerate among transcoding reference variables to the communication partner's terminal, receives a BT_VDP_VENDOR_ADAPTIVE_RSP message including the codec type index of the codec function, the resolution index, the quality index, the bitrate index and the framerate index, which are included in the partner's terminal, in response to the BT_VDP_VENDOR_ADAPTIVE_ CMD message, transmits the BT_VDP_VENDOR_END_ CMD message to the partner's terminal, receives the BT_VDP_VENDOR_ADAPTIVE_RSP message in correspondence to a BT_ VDP_VENDOR_END_ CMD message.
